Europäisches Patentamt

European Patent Office

Office européen des brevets

(19)

(11) Veröffentlichungsnummer: **0 271 488**
**B1**

(12) **EUROPÄISCHE PATENTSCHRIFT**

(45) Veröffentlichungstag der Patentschrift: **16.05.90**

(51) Int. Cl.⁵: **A 47 J 37/10,** A 47 J 37/01

(21) Anmeldenummer: **86904763.9**

(22) Anmeldetag: **29.07.86**

(86) Internationale Anmeldenummer:
**PCT/DE86/00307**

(87) Internationale Veröffentlichungsnummer:
**WO 87/00742 12.02.87 Gazette 87/04**

(54) GARGEFÄSS.

(30) Priorität: **09.08.85 DE 3528610**

(43) Veröffentlichungstag der Anmeldung:
**22.06.88 Patentblatt 88/25**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
**CH-A- 260 048
DE-A-2 711 402
DE-C- 379 232
FR-A- 563 645
FR-A-2 120 637
GB-A- 311 702
GB-A- 394 980
GB-A- 424 981
US-A-2 434 166
US-A-2 538 567**

(73) Patentinhaber: **ALFA INSTITUT FÜR
HAUSWIRTSCHAFTLICHE PRODUKT- UND
VERFAHRENS-ENTWICKLUNG GMBH
Albrechtstrasse 4
D-6228 Eltville am Rhein 2 (DE)**

(72) Erfinder: **SCHULTZ, Horst
Am Dornbusch 23
D-6203 Massenheim (DE)**

(74) Vertreter: **Keil, Rainer A., Dipl.-Phys. Dr. et al
KEIL & SCHAAFHAUSEN Patentanwälte
Eysseneckstrasse 31
D-6000 Frankfurt am Main 1 (DE)**

Courier Press, Leamington Spa, England.

**Beschreibung**

Die Erfindung bezieht sich auf ein Gargefäß nach dem Oberbegriff des Anspruchs 1.

Aus der GB—A—394 980 ist ein Gargefäß mit einem topfartigen, für die Aufnahme der zuzubereitenden Speisen bestimmten Behälter und einem auf diesen aufzusetzenden, die Einfüllöffnung verschließenden Deckel bekannt. In dem Innenraum des Deckels sind Strahlen erzeugende Lampen untergebracht. Der Innenraum des Deckels ist mit einer Glasplatte abgedeckt. Das Deckelgehäuse überkragt die Glasplatte radial nach außen und liegt auf einer oberen Randabflachung des doppelwandigen Behälters auf. Der Behälter ist mit einem rundumlaufenden Standfuß ausgestattet. eine Verwendung des beheizbaren Deckels als Kochplatte ist nicht beansichtigt und auch nicht möglich.

Das Kochgefäß nach der US—A—2 538 567 hat einen beheizbaren Deckel, welcher — nach dem Umdrehen — auch als Kochplatte verwendbar ist. Dabei steht der Behälter unmittelbar auf einer im Deckelinneren vorgesehenen Heizspirale auf, was unerwünscht ist. Zur Abdichtung von Deckel und Behälter ist eine Bajonette-Verriegelung vorgesehen.

Das Gargefäß nach der FR—A—2 120 637 hat ebenfalls einen beheizbaren Deckel, ohne jedoch als Kochplatte verwendbar zu sein.

Bei dem beheizbaren Deckel für ein Gargefäß nach der CH—A—260 048 ist das Deckelgehäuse von einer metallischen Strahlungsfläche abgedeckt. Das Deckelgehäuse ragt über die Strahlungsfläche nicht hinaus, so daß nur eine unbefriedigende Abdichtung des Gargefäßes bei Verwendung des Deckels als solchem erreichbar ist. Der Behälter findet bei Verwendung das Deckels als Kochplatte keinen seitlichen Halt.

Bei dem aus der FR—A—563 645 bekannten heizbaren Deckel weist letzterer eine rundumlaufende innere Abkantung auf, um den Behälter bei der Verwendung des Deckels als Kochplatte aufzunehmen. Eine Abdeckplatte für die Heizquelle im Deckelinnenraum ist jedoch nicht vorgesehen. Dadurch hat der Behälter in dem als Kochplatte verwendten Deckel keinen sicheren Stand. Außerdem übergreift der Rand des Deckels bei Verwendung als solchem den oberen Rand des Behälters außen, so daß nur eine unbefriedigende Abdichtung gegen Dampfaustritt beim Kochen erzielt werden kann.

Aufgabe der vorliegenden Erfindung ist es, eine neuartige und vielseitig verwendbare Beheizung für ein Gargefäß der gattungsgemäßen Art vorzuschlagen, wobei bei Verwendung des Deckels als solchem eine gute Abdichtung des Gefäßinnenraums und bei Verwendung des Deckels als Kochplatte eine sichere Position des Behälters gegen seitliches Verschrieben gewahrleistet ist.

Diese Aufgabe wird nach der Erfindung im wesentlichen mit den Merkmalen des kennzeichnenden Teils des Anspruchs 1 gelöst.

Die Heizung soll ihre Energie im wesentlichen in Richtung des Topfinnenraumes abstrahlen. Die in dem Behälter des Gargefäßes aufgenommenen Speisen können damit bei oben aufgesetztem Deckel mittels der in diesem untergebrachten Heizquelle von oben erwärmt und damit gegart werden. Der Deckel kann — umgedreht — auch als Heizplatte verwendet werden, auf welche der Behälter oder irgendein anderer Behälter aufgesetzt werden kann, um die darin enthalden Speisen von unten zu erwärmen und damit zu garen. Glaskeramikplatten der vorgesehenen Art sind für Kochfelder von Elektroherden an sich bekannt. Wird der erfindungsgemäß Deckel als solcher verwendet, schützt die hitzebeständige Glaskeramikplatte die hinter ihr angeordnete elektrische Heizquelle gegen den Zutritt aufsteigender Dämpfe und aufsteigenden Wrasens. Wird der Deckel als Kochplatte verwendet, übt die Glaskeramikplatte ihre an sich bekannte Funktion als Stellfläche für den die zuzubereitenden Speisen enthaltenden Behälter aus und kann aufgrund ihrer Stabilität hoher Behältergewichte aufnehmen. Der über die Außenfläche der als Glaskeramikplatte ausgebildeten Platte vorspringende umlaufende Deckelrand, welcher in eine umlaufende Randsicke des Behälterrandes paßt, gewährleistet eine konzentrische und damit weitgehend dichte Auflage des Deckels auf dem Behälterrand. Bei Verwendung des Deckels als Kochplatte dient der dann hochstehende Deckelrand zur Sicherung der Position des aufgestellten Behälters, welcher dadurch weniger leicht ungewollt seitlich zu verschieben ist. Dadurch daß die umlaufende Randsicke des Behälters radial außerhalb der Behälterwandung liegt, ist die Einfüllöffnung des Behälters vollständig freigehalten. Da der Deckelrand an den Durchmesser der Randsicke des Behälters angepaßt ist, kann ein weiteres mit de Erfindung vorgeschlagenes Merkmal auf einfache Weise verwirklicht werden, wonach der lichte Durchmesser der von dem kreisförmig umlaufenden Deckelrand begrenzten Aussparung geringfügig größer ist als der Außendurchmesser des Behälters in seinem Bodenbereich. Dadurch paßt der Behälter genau in die von dem Deckelrand umgebene Aussparung auf die Glaskeramikplatte, wenn der Deckel als Kochplatte verwendet wird.

Der Deckel hat vorzugsweise zwei diametral einander gegenüber angeordnete fußatige Vorsprünge mit ebener Aufständsfläche. Dies erlaubt es, trotz der Erwärmung des Deckels diesen als Heizplatte zu verwenden, ohne daß die Arbeitsfläche, auf welche er aufgestellt ist, verbrannt wird, insbesondere wenn die Vorsprüng aus einem schlecht wärmeleitenden Material, wie Kunststoff gebildet sind. Die fußartigen Vorsprünge bilden dabei je Teil eines Deckelgriffs, welche dann beispielsweise einstückig aus schlecht wärmeleitendem Material, wie Kunststoff hergestellt sein können.

Vorzugsweise liegen die von den Vorsprüngen gebildeten Aufstandsflächen außerhalb im Abstand von der Oberfläche des Deckels, so daß die sich erhietzende Oberseite des Deckels einen Abstand von der Arbeitsfläche hat, auf welche der Deckel als Kochplatte aufgestellt ist.

Gemäß einer Weiterbildung des Erfindungsgedankens ist in einem Der Deckelgriffe eine Steuereinrichtung für die Temperatur der Heizquelle angeordnet.

Diese Steuereinrichtung hat beispielsweise ein Stellrad, dessen Einstellung sowohl nach oben als auch nach unten angezeigt wird. Hierdurch wird gewährleistet, daß der Benutzer unabhängig davon, ob der Deckel, als solcher oder als Kochplatte verwendet wird, die eingestellte Kochstufe jeweils leicht on oben ablesen kann.

Für eine einfache Montage des erfindungsgemäßen Deckels ist vorgesehen, daß die Heizquelle zwischen dem Boden eines im Innenraum des Deckels aufgenommenen Gehäuse und der in die dem Boden des Gehäuses gegenüberliegende Öffnung fest eingesetzten Glaskeramikplatte mittels Feder eingespannt ist. Dies setzt voraus, daß die Glaskeramikplatte an ihrem Außenrand fest mit dem Gehäuse benachbart dessen Öffnung festgelegt, beispielsweise eingekittet ist. Der Zwischenraum zwischen den Gehäuse und der Deckelwandung kann der Aufnahme von Wärmeisolationsmaterial dienen.

Die Festlegung des Gehäuses an dem Deckel kann vorzugsweise so getroffen sein, daß das Gehäuse mit seinem die Öffnung bestimmenden Rand um die untere Randkante des Deckels umgebördelt ist und so den umlaufenden Deckelrand bildet, der dadurch zusätzlich versteift ist.

Bei einer alternativen Ausführungsform der Erfindung kann auch vorgesehen sein, daß die Glaskeramikplatte des als solchen verwendeten Deckels, also mit nach unten gekehrter Glaskeramikplatte, an ihrem Außenrand heruntergezogen ist und mit einer ebenen Stirnfläche auf einem flachen Bereich des von der Behälterwandung auswärts gebogenen Behälterrandes aufsetzbar ist. Hierdurch kann eine besonders günstige Abdichtung des Deckelinnenraumes gegen eindringende Feuchtigkeit erzielt werden.

Bei einer weiterin Ausgestaltung der Erfindung hat die Glaskeramikplatte einen mittleren, eine ebene Stellfläche bildenden Bereich und einen diesen umgebenden demgegenüber nach unten außen abgewinkelten Außenrand, welcher in einer Randsicke des Behälterrandes aufnehmbar ist. Statt der Abwinklung kann die Glaskeramikplatte auch entsprechend gewölbt sein. Bei diesen Ausgestaltungen überwölbt die Glaskeramikplatte damit den Behälterinnenraum etwas. In diesem Falle verjüngt sich der Behälter zu seinem Boden hin vorzugsweise so, daß er mit seinem Bodenbereich wiederum auf die ebene Stellfläche der Glaskeramikplatte paßt und genau über der Heizquelle des als Kochplatte verwendeten Deckels zentriert wird.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Fig. 1 ein die Erfindung aufweisendes Gargefäß schematisch im Vertikalschnitt im Bereich des Deckels,

Fig. 2 eine Ansicht des Deckels von unten gemäß Richtung A von Fig. 1,

Fig. 3 im Detail gegenüber Fig. 1 vergrößert eine andere Ausführungsform des erfindungsgemäßen Deckels in dessen Randbreich, und

Fig. 4 schematisch im Vertikalschnitt eine andere Ausführungsform des erfindungsgemäßen Gargefäßes.

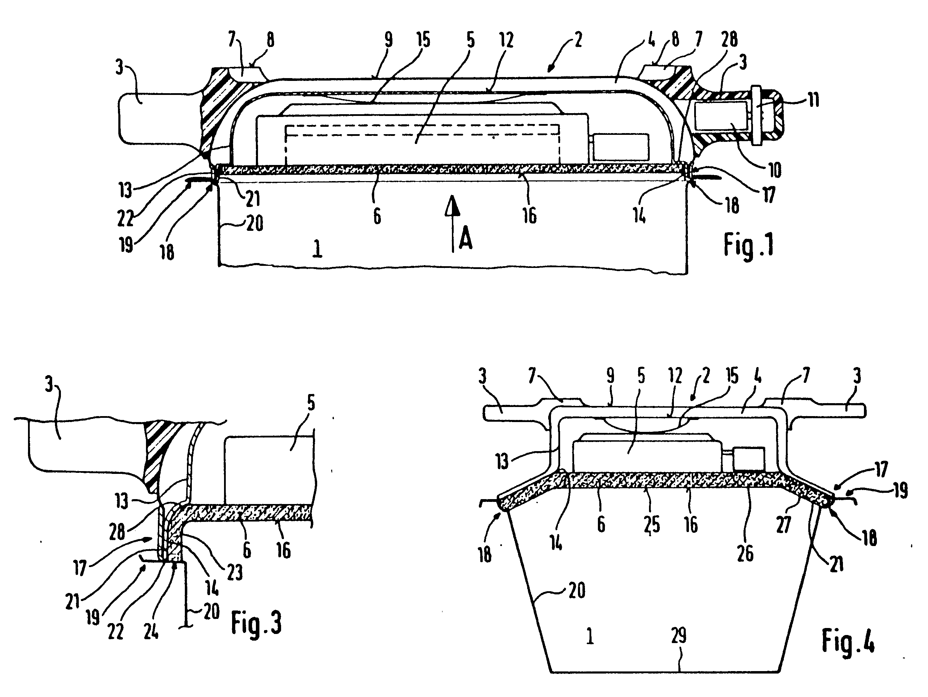

Das Gargefäß besteht gemäß Fig. 1 aus einem topf-, tiegel- oder pfannenartigen Behälter 1 für die Aufnahme der zuzubereitenden Speisen und einem auf diesen aufzusetzenden, die Einfüllöffnung des Behälters 1 verschließenden Deckel 2. Der Deckel 2 hat in dem dargestellten Fall zwei Deckelgriffe 3 aus wärmeisolierendem Material, nämlich Kunststoff. In dem von der Deckelwandung überwölbten Innenraum 4 ist eine elektrische Heizquelle 5 angeordnet, welche beispielsweise in einem Lichtheizkörper oder einer sonstigen Heizquelle besteht, welche durch Wärmestrahlung hinreichend Energie auf das in dem Behälter 1 befindliche Gargut abstrahlt. Bestandteil der elektrischen Heizquelle 5 kann beispielsweise auch ein Grillstab stein. Mit Hilfe des gemäß Fig. 1 auf den Behälter 1 aufgesetzten Deckels 2 kann das im Behältnis 1 befindliche Gargut von oben erwärmt, gegart und/oder gegrillt werden. Der Innenraum 4 des Deckels 2 ist mit einer Glaskeramikplatte 6 oder eine sonstige die Wärmestrahlung der Heizquelle 5 hindurchlassenden Platte derart abgedeckt, daß die Heizquelle 5 gegen Zutritt von Feuchtigkeit aus dem Behältnis 1 während des Garvorganges oder beim Reinigen geschützt liegt. In dem dargestellten Fall ist die Glaskeramikplatte 6 in der Öffnung 14 eines in dem Inneraum 4 des Deckels 2 aufgenommenen Gehäuses 13 gehalten. Zu diesem Zweck weist das Gehäuse 13 im Bereich seiner unteren Öffnung 14 eine umflaufende Stufe 28 auf, an welche die Glaskeramikplatte 6 mit ihrem Randbereich anliegt. Die Umfangsfläche der Glaskeramikplatte 6 ist mit dem im Anschluß an die Stufe 28 weitere heruntergezogenen Randabschnitt des Gehäuses 13 dichtend verkittet. Der weitere, nach unten gezogene und die Öffnung 14 des Deckels 2 bestimmende Randbereich des Gehäuses 13 ist um die nach unten über die Außenfläche 16 der Glaskeramikplatte 6 vorspringende Randkante 22 des Deckels 2 zur Bildung des Deckelrandes 17 umgebördelt. Der Deckelrand 17 hat einen solchen Durchmesser, daß er in eine Randsicke 18 des radial nach außen weggebogenen Behälterrandes 19 paßt. Der lichte Durchmesser der von dem Deckelrand 17 umgrenzten Öffnung 14 ist etwas größer als der Außendurchmesser des Behälters 1 in seinem Bodenbereich, so daß beim Umdrehen des Dekkels 2 der Behälter 1 ohne großes seitliches Spiel auf die Außenfläche 16 der Glaskeramikplatte 6 aufgestellt werden kann, so daß der Deckel 2 als Kochplatte fungiert und die Erhitzung der in dem Behälter 1 aufgenommenen Speisen von unten erfolgt.

Die Deckelgriffe 3 sind diametral einander gegenüberliegend an der Außenfläche der Deckelwandung befestigt. Sie haben außer dem eigentlichen Griffteil fußartige Vorsprünge 7, deren Aufstandsfläche 8 im Abstand oberhalb der Oberseite 9 des Deckels 2 liegt. Wenn der Deckel 2 umgedreht auf eine Arbeitsplatte aufgestellt wird, um als Kochplatte verwendet zu werden, halten die fußartigen Vorsprünge 7 den erforderlichen Abstand der sich erhitzenden Oberseite 9 des Deckels 9 von der Arbeitsfläche. In dem einen Deckelgriff 3 ist eine Steuereinrichtung 10 für die Temperatur der Heizquelle 5 integriert. Die Steuereinrichtung 10 ist von Hand über ein Stellrad 11 zu betätigen, welches aus der Oberseite und der Unterseite des Griffes 3 herausragt und dort eine Kochstufenanzeige trägt, und zwar in der Weise, daß sowohl von oben — bei Benutzung des Deckels 2 als solchem — als auch von unten — bei Benutzung des Deckels 2 als Kochplatte — die jeweils eingestellte Kochstufe oder — temperatur abgelesen werden kann.

Die Heizquelle 5 ist zur einfachen und sicheren Montage zwischen dem Boden 12 des Gehäuses 13 und der in die dem Boden 12 des Gehäuses 13 gegenüberliegende Öffnung 14 eingesetzte Glaskeramikplatte 6 mittels einer Blattfeder 15 eingespannt.

Während gemäß Fig. 1 der Deckel 2 mit dem aus Randkante 22 und umgebördeltem Gehäuserand 21 gebildeten Deckelrand 17 in einer radial außerhalb der Behälterwandung 20 liegenden Randsicke 18 des Behälterrandes 19 sitzt, ist bei der in Fig. 3 dargestellten Ausführungsform der Behälterrand 19 von der Behälterwandung 20 unter Bildung eines ebenen Auflagebereiches nach außen weggebogen. Der Außenrand 23 der Glaskeramikplatte 6 ist in diesem Falle im wesentlichen senkrecht nach unten weggebogen und bildet eine ebene Stirnfläche 24, mit welcher der Deckel 2 auf dem ebenen Bereich des Behälterrandes 19 aufsitzen kann. Auch hier bildet das Gehäuse 13 eine Stufe 28, an welcher die Glaskeramikplatte 6 anliegt. Ebenso ist der untere Gehäuserand 21 um die untere Randkante 22 des Deckels 2 zur Bildung des Deckelrandes 17 umgebogen. Die mit Kitt zu verschließende Fuge zwischen dem nach unten abgebogenen Außenrand 23 der Glaskeramikplatte 6 und dem diesem zugewandten Bereiches des Gehäuserandes 21 ist dementsprechend länger als bei der Ausführungsform von Fig. 1, so daß eine zuverlässigere Dichtigkeit erzielt werden kann.

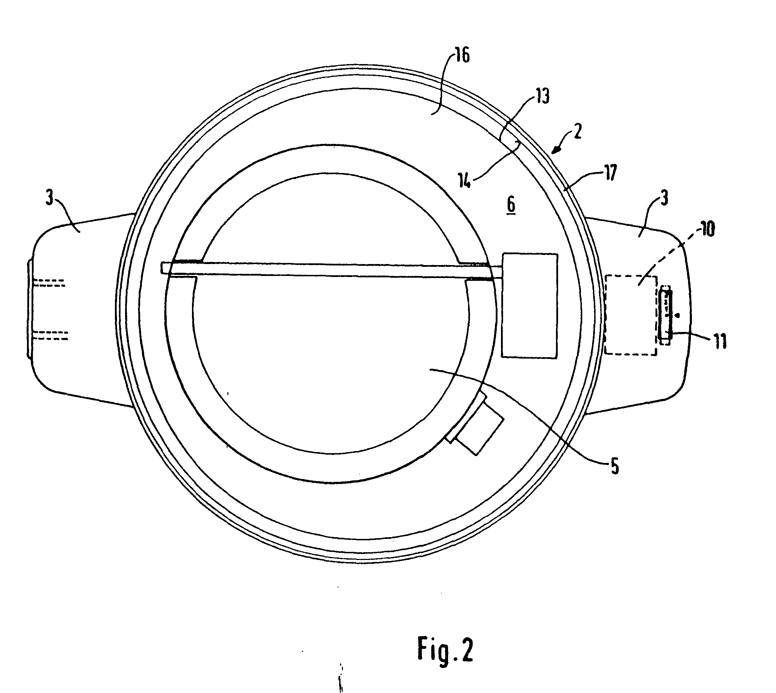

Fig. 1 veranschaulicht eine noch weitere Ausführungsform der Erfindung, die sich im wesentlichen von den vorhergehend erörterten Ausführungsform dadurch unterscheidet, daß die Glaskeramikplatte 6 einen mittleren Bereich 26 mit einer ebenen Stellfläche 25 für die Verwendung des Deckels 2 als Kochplatte hat, welcher von einem schräg nach unten außen abgewinkelten Außenrand 27 umgeben ist. Dadurch überwölbt die Glaskeramikplatte 6 den Innenraum des Behälters 1 und liegt mit ihrem Außenrand 27 in einer entsprechend schräg gestellten Randsicke 18 des nach außen weggebobenen Behälterrandes 19. In diesem Falle verlaufen der Gehäuserand 21 und damit auch der Deckelrand 17 praktisch über die gesamte äußere Anlagefläche des schrägen Außenrandes 27 der Glaskeramikplatte 6 und können dort dichtend angebracht sein. Ebenso wie bei der Ausführungsform gemäß Fig. 3 liegt damit die Dichtfuge zwischen Glaskeramikplatte 6 und Gehäuse 13 bzw. der Randkante 22 des Deckels 2 beim Garvorgang außerhalb des eigentlichen Angriffsbereiches des aus dem Behälter 1 aufsteigenden Wrasens. Bei der Ausführungsform gemäß Fig. 4 läuft die Behälterwandung 20 ferner zum Behälterboden 29 hin konisch zusammen, so daß der Außendurchmesser des Behälters 1 im Bodenbereich geringfügig geringer ist als der Durchmesser der von der Glaskeramikplatte 6 an seiner Außenfläche 16 gebildeten Stellfläche 25, so daß der Behälter 1 bei Verwendung des Deckels 2 als Kochplatte unmittelbar auf die Stellfläche 25 aufgestellt werden kann.

1 Behälter
2 Deckel
3 Deckelgriff
4 Innenraum
5 Heizquelle
6 Glaskeramikplatte
7 Vorsprünge
8 Aufstandsfläche
9 Oberseite
10 Steuereinrichtung
11 Stellrad
12 Boden
13 Gehäuse
14 Öffnung
15 Feder
16 Außenfläche
17 Deckelrand
18 Randsicke
19 Behälterrand
20 Behälterwandung
21 Gehäuserand
22 Randkante
23 Außenrand
24 Stirnfläche
25 Stellfläche
26 Mittlerer Bereich
27 Außenrand
28 Stufe
29 Behälterboden

**Patentansprüche**

1. Gargefäß mit einem topf-, tiegel- oder pfannenartigen, für die Aufnahme der zuzubereitenden Speisen bestimmten Behälter (1) und einem auf diesen aufzusetzenden, die Einfüllöffnung verschließenden, wenigstens einen Deckelgriff (3)

# EP 0 271 488 B1

aufweisenden Deckel (2), wobei in dem Innenraum (4) des Deckels (2) eine z.B. als Lichtheizkörper oder Grillstab ausgebildete elektrische Heizquelle (5) angeordnet ist, wobei der Innenraum (4) des Deckels (2) topfinnenraumseitig mit einer die Strahlung der Heizquell (5) hindurchlassenden Platte (6) abgedeckt ist, dadurch gekennzeichnet, daß der Deckel (2) einen über die Außenfläche (16) der als Glaskeramikplatte ausgebildeten Platte (6) worspringenden umlaufenden Deckelrand (17; 22, 23; 27) aufweist, welcher in eine umlaufende Randsicke (18) des Behälterrandes (19) paßt, daß die umlaufende Randsicke (18) radial außerhalb der Behälterwandung (20) liegt und daß der lichte Durchmesser der von dem kreisförmig umlaufenden Deckelrand (17; 22, 23; 27) begrenzten Aussparing geringfügig größer ist als der Außendurchmesser des Behälters (1) in seinem Bodenbereich.

2. Gargefäß nach Anspruch 1, dadurch gekennzeichnet, daß der Deckel (2) zwei diametral einander gegenüber angeordnete fußartige Vorsprünge (7) mit ebener Aufstandsfläche (8) aufweist, die je Teil eines Deckelgriffs (3) bilden.

3. Gargefäß nach Anspruch 2, dadurch gekennzeichnet, daß die von den Vorsprüngen (7) gebildeten Aufstandsflächen (8) außerhalb im Abstand von der Oberseite (9) des Deckels (2) liegen.

4. Gargefäß nach einem der Ansprüche 1 bis 3, dadurch gekennzeichnet, daß in einem der Deckelgriffe (3) eine Steuereinrichtung (10) für die Temperatur der Heizquelle (5) angeordnet ist.

5. Gargefäß nach Anspruch 4, dadurch gekennzeichnet, daß die Steuereinrichtung (10) ein Stellrad (11) aufweist, dessen Einstellung sowohl nach oben als auch nach unten angezeigt wird.

6. Gargefäß nach einem der Ansprüche 1 bis 5, dadurch gekennzeichnet, daß die Heizquelle (5) zwischen dem Boden (12) eines im Innenraum (4) des Deckels (2) aufgenommenen Gehäuses (13) und der in die dem Boden (12) des Gehäuses (13) gegenüberliegende Öffnung (14) fest eingesetzten Glaskeramikplatte (6) mittels Feder (15) eingespannt ist.

7. Gargefäß nach einem der Ansprüche 1 bis 6, dadurch gekennzeichnet, daß das Gehäuse (13) mit seinem die Öffnung (14) bestimmenden Gehäuserand (21) um die untere Randkante (22) des Deckels (2) umgebördelt ist und so den umlaufenden Deckelrand (17) bildet.

8. Gargefäß nach Ansprüche 1 bis 7, dadurch gekennzeichnet, daß die Glaskeramikplatte (6) mit ihrem Außenrand (23) heruntergezogen ist und mit einer ebenen Stirnfläche (24) auf einem flachen Bereich des von der Behälterwandung (20) auswärts gebogenen Behälterrandes (19) aufsetzbar ist.

9. Gargefäß nach einem der Ansprüche 1 bis 8, dadurch gekennzeichnet, daß die Glaskeramikplatte (6) einen mittleren eine ebene Stellfläche (25) bildenden Bereich (26) und einen diesen umgebenden demgegenüber nach unten außen abgewinkelten Außenrand (27) aufweist.

## Revendications

1. Récipient de cuisson comprenant un corps (1) en forme de pot, de marmite ou de poëlon pour recevoir les aliments à préparer et un couvercle (2) à appliquer sur celui-ci, fermant l'ouverture de remplissage et comportant au moins une poignée (3), une source de chaleur électrique (5), réalisée par exemple sous la forme d'un corps conducteur de lumière ou d'un gril, étant disposée dans l'éspace interne (4) du couvercle (2), l'espace interne (4) du couvercle (2) étant recouvert, côté intérieur du pot, par une plaque (6) laissant passer le rayonnement de la source de chaleur (5), caractérisé par le fait que le couvercle (2) comporte un bord périphérique (17; 22, 23; 27) qui, faisant saillie au-delà de la surface extérieure (16) de la plaque (6) réalisée sous la forme d'une plaque vitrocéramique, s'engage dans une moulure périphérique (18) du bord (19) du corps, que la moulure périphérique (18) est située radialement en dehors de la paroi (20) du corps et que le diamètre intérieure de l'évidement, délimité par le bord periphérique circulaire (17; 22, 23; 27) du couvercle, est légèrement plus grand que le diamètre extérieur du corps (1) dans sa zone du fond.

2. Récipient de cuisson selon la revendication 1, caractérisé par le fait que le couvercle (2) comporte deux saillies (7) en forme de pieds diamétralement opposées et munies d'une surface d'appui plane (8) qui constitue respectivement une partie d'une poignée (3).

3. Récipient de cuisson selon la revendication 2, caractérisé par le fait que les surfaces d'appui (8), formées par les saillies (7), sont situées extérieurement à distance de la face supérieure (9) du couvercle (2).

4. Récipient de cuisson selon l'une de revendications 1 à 3, caractérisé par le fait qu'un dispositif de commande (10) pour la température de la source de chaleur (5) est disposé dans l'une des poignées (3).

5. Récipient de cuisson selon la revendication 4, caractérisé par le fait que le dispositif de commande (10) comporte une roue de réglage (11) dont la position est indiquée aussi bien vers le haut que vers le bas.

6. Récipient de cuisson selon l'une des revendications 1 à 5, caractérisé par le fait que la source de chaleur (5) est serrée au moyen d'un ressort (15) entre le fond (12) d'un boîtier (13) placé dans l'espace interne (4) du couvercle (2) et la plaque vitrocéramique (6) solidement insérée dans l'ouverture (14) située du côté opposée au fond (12) du boîtier (13).

7. Récipient de cuisson selon l'une des revendications 1 à 6, caractérisé par le fait que le boîtier (13) par son bord (21), déterminant l'ouverture (14), est rabattu autour de l'arête inférieure (22) du bord du couvercle (2) et forme ainsi le bord périphérique (17) du couvercle.

8. Récipient de cuisson selon les revendications 1 à 7, caractérisé par le fait que le bord extérieur (23) de la plaque vitrocéramique s'étire vers le bas et par une surface frontale plane (24), vient s'appliquer sur une zone plate du bord (19) coudé vers l'extérieur à partir de la paroi (20) du corps.

9. Récipient de cuisson selon l'une des revendications 1 à 8, caractérisé par le fait que la plaque vitrocéramique (6) comporte une zone médiane (26) formant une surface d'application plane (25) et un bord extérieur (27) coudé extérieurement vers le bas par rapport à cette zone médiane qu'il entoure.

**Claims**

1. Cooking vessel having a pot-, saucepan- or pan-like container (1), which is intended to receive the food which is to be prepared, and a lid (2), which is to be set upon the latter, closes the filling opening and has at least one lid handle (3), in which case there is arranged in the interior space (4) of the lid (2) an electric heat source (5) which is formed, for example, as a light-directing body or grill bar, the interior space (4) of the lid (2) being covered, on the side of the interior space of the pot, with a plate (6) which lets through the radiation of the heat source (5), characterised in that the lid (2) has a circumferential lid rim (17; 22, 23; 27) which projects over the outer surface (16) of the plate (6) formed as a glass ceramic plate and fits into a circumferential rim bead (18) of the container rim bead (19), in that the circumferential rim bead (18) lies radially outside the container wall (20) and in that the inside diameter of the recess, which is delimited by the lid rim (17; 22, 23; 27) running around in a circular manner, is slightly greater than the outside diameter of the container (1) in its base area.

2. Cooking vessel according to claim 1, characterised in that the lid (2) has two foot-like projections (17), which are arranged diametrically opposite each other, with planar contact surface (8), each forming part of a lid handle (3).

3. Cooking vessel according to claim 2, characterised in that the contact surfaces (8), which are formed by the projections (7), lie outside and at a distance from the upper side (9) of the lid (2).

4. Cooking vessel according to one of the claims 1 to 3, characterised in that a control device (10) for the temperature of the heat source (5) is arranged in one of the lid handles (3).

5. Cooking vessel according to claim 4, characterised in that the control device (10) has an adjusting wheel (11), the adjustment of which is indicated both upwards and downwards.

6. Cooking vessel according to one of the claims 1 to 5, characterised in that the heat source (5) is clamped by means of spring (15) between the base (12) of a housing (13), which is accommodated in the interior space (4) of the lid (2), and the glass ceramic plate (6), which is firmly inserted into the opening (14) lying opposite the base (12) of the housing (13).

7. Cooking vessel according to one of the claims 1 to 6, characterised in that the housing (13) with its housing rim (21), which determines the opening (14), is beaded about the lower rim edge (22) of the lid (2) and thus forms the circumferential lid rim (17).

8. Cooking vessel according to claims 1 to 7, characterised in that the glass ceramic plate (6) is drawn down with its outer rim (23) and can be set with a planar face (24) on a flat area of the container rim (19) which is bent outwards from the container wall (20).

9. Cooking vessel according to one of the claims 1 to 8, characterised in that the glass ceramic plate (6) has a central area (26), forming a planar positioning surface (23), and an outer rim (27) which surrounds the latter and is angled away in comparison downwards and outwards.

Fig.1

Fig.3

Fig.4

EP 0 271 488 B1

Fig.2